# EUROPEAN PATENT SPECIFICATION

(11) **EP 3 165 136 B1**
(45) Date of publication and mention of the grant of the patent: **27.06.2018**
(21) Application number: 16196585.0
(22) Date of filing: 31.10.2016
(51) Int. Cl.: A47J 31/18, A47J 31/40, A47J 31/44, A47J 31/58, A47J 31/02

(54) **A COFFEE MACHINE USED WITH A CAPSULE**
KAFFEEMASCHINE ZUR VERWENDUNG MIT EINER KAPSEL
MACHINE À CAFÉ À CAPSULE

(30) Priority: 03.11.2015 TR 201513676
(43) Date of publication of application: 10.05.2017
(73) Proprietor: Arçelik Anonim Sirketi, 34950 Istanbul (TR)
(72) Inventor: ALPTEKIN, AHMET, 34950 ISTANBUL (TR); GUNDUZ, NIHAT, 34950 ISTANBUL (TR); CENGIZ, OSMAN, 34950 ISTANBUL (TR); COBAN, OMER BURAK, 34950 ISTANBUL (TR); GERZELI, ISMAIL, 34950 ISTANBUL (TR)

(56) References cited:
- EP-A1- 2 732 738
- WO-A1-2012/072761
- WO-A1-2014/191217

## Description

The present invention relates to a coffee machine suitable for use with a single-use capsule containing coffee.

Use of single-use capsules containing coffee in coffee machines is known. In this type of machines, the capsule is placed to a housing disposed in the upper portion of the body of the machine, and the coffee in the capsule is transferred to a brewing chamber that is disposed in the lower portion of the housing by the capsule being blown/opened. The coffee in the brewing chamber is mixed with water and heated by a heater preferably disposed under the brewing chamber. The brewed coffee can be automatically transferred to a cup or can be transferred by the user to a cup. After the brewing process, the brewing chamber is removed to clean the waste coffee in the brewing chamber. When the user forgets to replace the brewing chamber and attempts to brew coffee, the coffee from the capsule pours on the heater. When the brewing process is carried out in this case, the dry coffee on the heater burns, forming a layer on the heater that is hard to clean and smells bad. Moreover, the burnt coffee may lead to safety vulnerability that may cause even fire.

In the state of the art International Patent Application No. WO2011007266, a coffee machine using capsules is disclosed.

In the state of the art Turkish Patent Application No. TR200100549, a coffee machine using capsules is disclosed. Document EP-A1 -2 732 738 shows a coffee machine according to the preamble of claim 1.

The aim of the present invention is the realization of a coffee machine that can be operated in a safe manner.

The coffee machine realized in order to attain the aim of the present invention, explicated in the claims, comprises a lid which partially closes the capsule housing and thus prevents the placement of capsule into the coffee machine when the brewing chamber where the coffee is brewed is not in its place. When the brewing chamber is taken out from its place within the coffee machine, the lid closes the top of the capsule housing. Thus, the capsule cannot be seated/placed into the capsule housing.

In an embodiment of the present invention, when the brewing chamber is restored to its place, the lid moves and opens the top of the capsule housing. Upon replacement of the brewing chamber, the coffee machine becomes operational and upon placement of the capsule into the capsule housing and upon opening thereof, the coffee in the capsule is emptied into the brewing chamber and the brewing process starts.

In another embodiment of the present invention, when the brewing chamber is taken out of its place, the lid almost completely covers over the capsule housing. Thus, the user is alerted by a more effective way that coffee must not be brewed in this state, that is, when the brewing chamber is not in its place. Since the top of the capsule housing is completely closed, the capsule cannot be placed into the capsule housing in this state.

In another embodiment of the present invention, movement of the lid upon taking out and replacing the brewing chamber is preferably realized by means of a movement mechanism which is integrated with the lid. When restored to its place, the brewing chamber triggers the movement mechanism whereby the lid opens the top of the capsule housing and when the brewing chamber is taken out of its place, the movement mechanism is triggered, thus the lid covers the top of the capsule housing.

In another embodiment of the present invention, the movement mechanism comprises a triggering pin that moves forward and backward upon the contact of the brewing chamber, a tension means that compresses or stretches by the movement of the triggering pin, and a support that transmits the movement of the triggering pin to the lid. While being restored to its place, the brewing chamber pushes the triggering pin and the support transmits the movement of the triggering pin to the lid, thus providing the opening of the top of the capsule housing. When the brewing chamber is taken out of its place, the compressed tension means pushes the triggering pin to the other direction and the support transmits the movement of the pin to the lid, thus providing the closing of the top of the capsule housing.

In another embodiment of the present invention, the support and the lid are positioned so as to be almost perpendicular to each other. Thus, as the triggering pin moves forward, the lid moves forward as well. The support transmits the movement of the triggering pin linearly to the lid.

In another embodiment of the present invention, the lid and the support are produced as a single piece. Thereby brewing of coffee, that is, opening of the capsule when the brewing chamber is not in its place is prevented by using fewer parts and the said problem is solved by preserving the cost advantage.

In another embodiment of the present invention, in addition to the closing of the top of the capsule housing with the lid, a warning sign is provided on the top surface of the lid, which can be easily seen by the user. By means of this embodiment, it is aimed to prevent the user from absently placing a capsule into the capsule housing the top of which is covered by the lid.

In another embodiment of the present invention, the color of the lid is different from the color of the capsule housing. By means of this embodiment, it is aimed that the lid that covered the top of the capsule housing when the brewing chamber is not in place is noticed more easily.

In the coffee machine of the present invention, any hazardous events that may occur due to distraction or mistake of the user are prevented by means of the lid that covers the top of the capsule housing after the brewing chamber is taken out of its place.

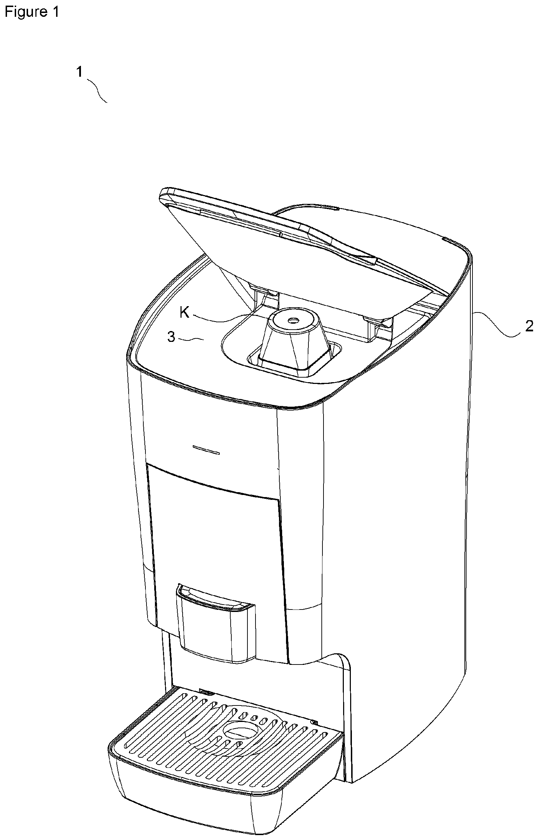

The coffee machine realized in order to attain the aim of the present invention is illustrated in the attached figures where
Figure 1 - is the perspective view of a coffee machine.

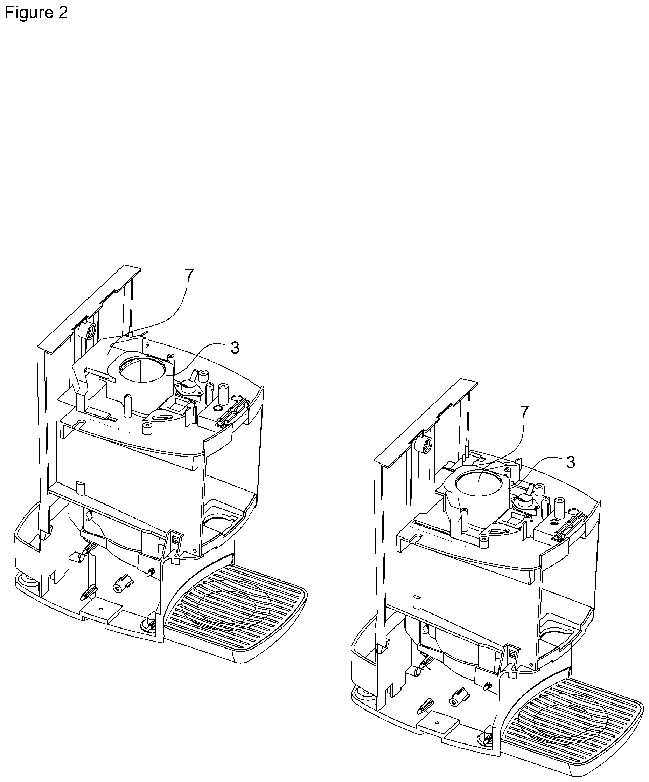

Figure 2 - is the view of the lid when on the top of the capsule housing and not on the top of the capsule housing in an embodiment of the present invention.

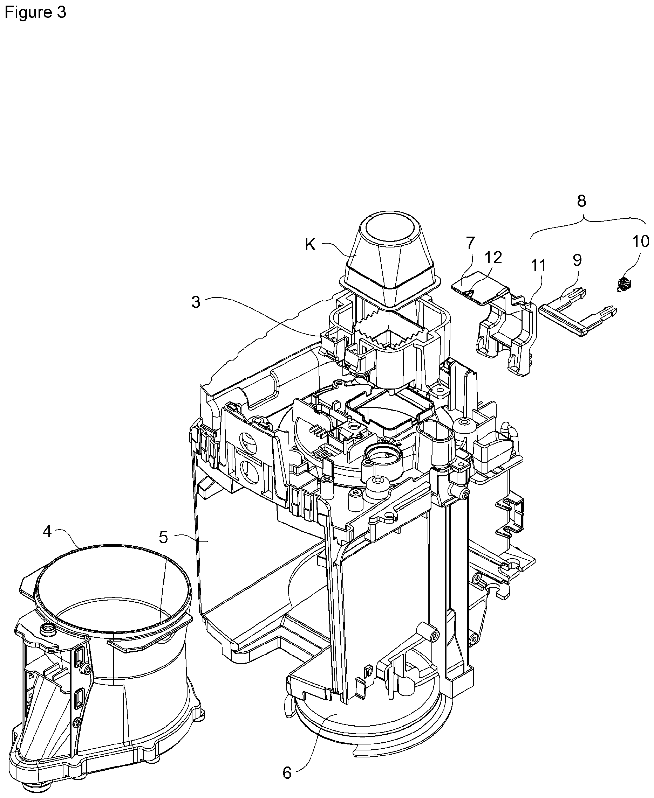

Figure 3 - is the exploded view of the lid and the movement mechanism in an embodiment of the present invention.

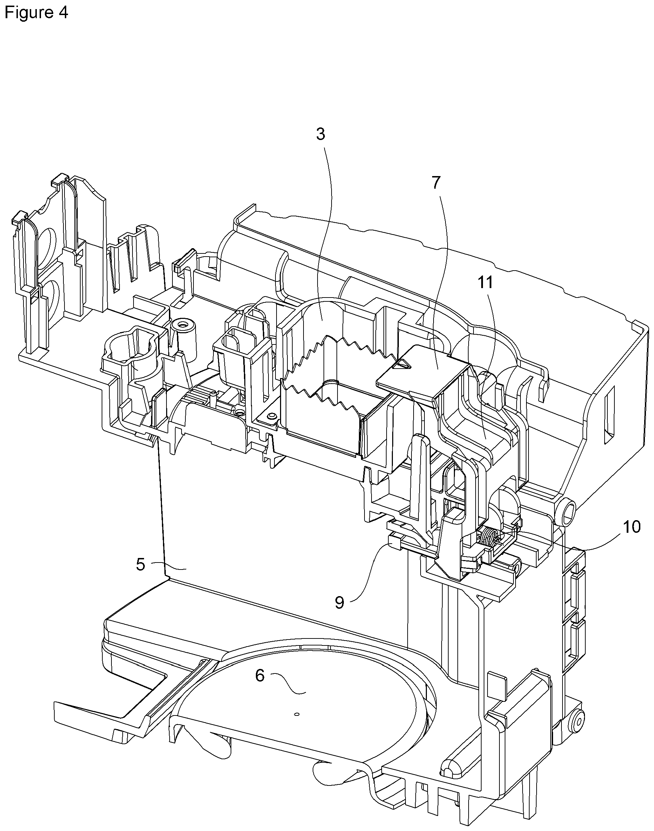

Figure 4 - is the cross-sectional view of the capsule housing related to an embodiment of the present invention.

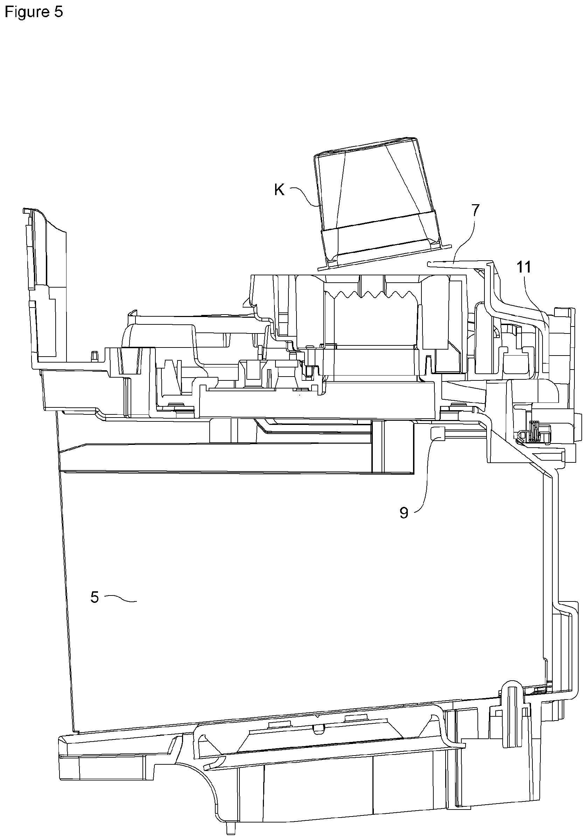

Figure 5 - is the sideways schematic view of the lid when the brewing chamber is not in the housing in an embodiment of the present invention.

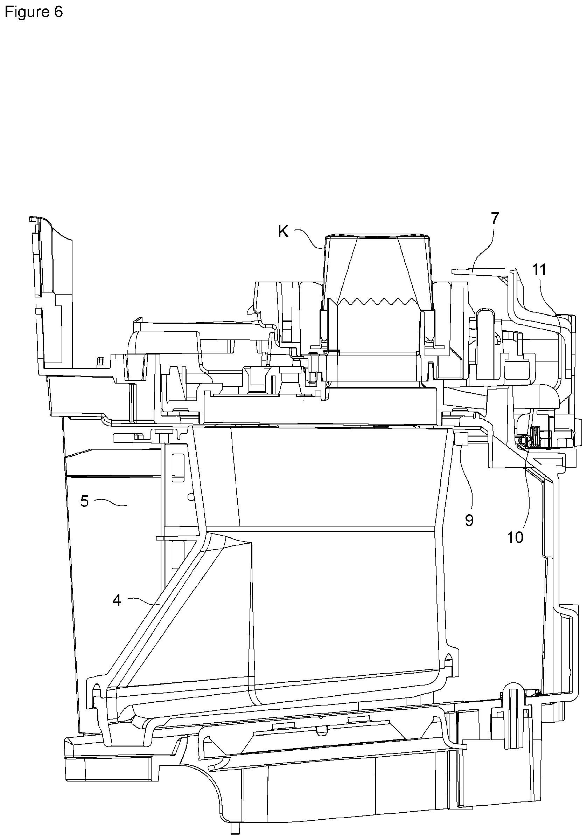

Figure 6 - is the sideways schematic view of the lid when the brewing chamber is in the housing in an embodiment of the present invention.

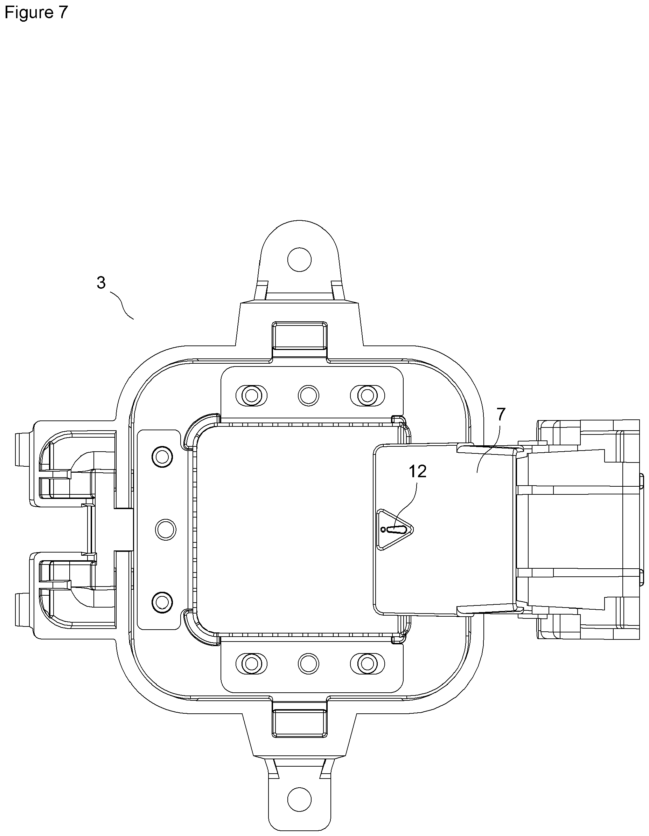

Figure 7 - is the top schematic view of the lid in an embodiment of the present invention.

The elements and steps in the figures are numbered as follows:
1. Coffee machine
2. Body
3. Capsule housing
4. Brewing chamber
5. Housing
6. Heater
7. Lid
8. Movement mechanism
9. Triggering pin
10. Tension means
11. Support
12. Warning sign

### K. Capsule

The coffee machine (1) comprises a body (2); a capsule housing (3) disposed on the upper part of the body (2) and wherein preferably a single-use capsule (K) is placed; a brewing chamber (4) that is disposed within the body (2) under the capsule housing (3), wherein coffee and water are added and brewed and that is detachable from the body (2); a housing (5) that is disposed in the body (2) and wherein the brewing chamber (4) is placed, and a heater (6) that provides the heating of the brewing chamber (4).

In the coffee machine (1), after the user places a capsule (K) into the capsule housing (3) and the capsule (K) is opened, the coffee is delivered into the brewing chamber (4) that is placed into the housing (5). When the user gives the start brewing command, water is transmitted from the water tank (not shown in the figures) by means of a pump (not shown in the figures) through the water line (not shown in the figures) into the brewing chamber (4) and the heater (6) heats up the brewing chamber (4), thus providing brewing of the coffee. The heater (6) is disposed preferably under the brewing chamber (4) and the heater (6) contacts the brewing chamber (4) only during the brewing process, and the heater (6) has a structure that can preferably move up and down.

The brewing chamber (4) can be taken out of the housing (5) for reasons such as cleaning, etc. The brewing chamber (4) is taken out preferably by opening a door (not shown in the figures) disposed on the front wall of the body (2) and pulling the brewing chamber (4) forward from the housing (5).

The coffee machine (1) of the present invention comprises a lid (7) that is disposed within the body (2), that moves when the brewing chamber (4) is taken out of the housing (5) to partially close the top of the capsule housing (3) and thereby prevents the placement of a capsule (K) into the capsule housing (3).

In the coffee machine (1) of the present invention, when the brewing chamber (4) is taken out of the housing (5) for purposes such as cleaning, etc. and then not replaced into the housing (5), in other words, when the brewing chamber (4) is not within the housing (5), the lid (7) moves and partially covers the top of the capsule housing (3). In case where the lid (7) partially covers the top of the capsule housing (3), when the user attempts to place a capsule (K) into the capsule housing (3) to brew coffee, the capsule (K) is not completely seated into the capsule housing (3). Thus, opening of the capsule (K), that is brewing coffee is prevented when the brewing chamber (4) is not in the housing (5).

In an embodiment of the present invention, when the brewing chamber (4) is replaced into the housing (5), the lid (7) is pushed by the brewing chamber (4), providing that the top of the capsule housing (3) is opened and thereby a capsule (K) can be placed into the capsule housing (3). In this embodiment, when the brewing chamber (4) is replaced into the housing (5) while the lid (7) covers the top of the capsule housing (3), the brewing chamber (3) pushes the lid (7), thus providing the opening of the top of the capsule housing (3), in other words, placement of a capsule (K) into the capsule housing (3).

In another embodiment of the present invention, the lid (7) enables the top of the capsule housing (3) to be almost completely closed. By means of the lid (7) closing the top of the capsule housing (3) almost completely, the capsule (K) cannot be placed into the capsule housing (3) when the brewing chamber (4) is not inside the housing (5). By means of this embodiment, the capsule (K) cannot be opened in any way when the brewing chamber (4) is not inside the housing (5).

In another embodiment of the present invention, the coffee machine (1) comprises a movement mechanism (8) that enables the lid (7) to move with the effect of the brewing chamber (4) and to cover/open the top of the capsule housing (3), in other words, provides that the capsule (K) can be placed/cannot be placed into the capsule housing (3). The movement mechanism (8) provides the movement of the lid (7) in interaction with the brewing chamber (4). When the brewing chamber (4) is taken out of the housing (5), the contact thereof with the movement mechanism (8) is interrupted and the movement mechanism (8) whose contact with the brewing chamber (4) is interrupted moves the lid (7), thus enabling the top of the capsule housing (3) to be covered. When placed into the housing (5), the brewing chamber (4) contacts the movement mechanism (8) and the movement mechanism (8) contacting the brewing chamber (4) moves the lid (7), thus providing that the top of the capsule housing (3) is opened and a capsule (K) can be placed into the capsule housing (3).

In another embodiment of the present invention, the movement mechanism (8) has a triggering pin (9) that the brewing chamber (4) contacts when inside the housing (5) and that has a structure preferably movable in the direction of taking out the brewing chamber (4) of the housing (5); a tension means (10) that is connected to the triggering pin (9) and that is compressed by the brewing chamber (4) by pushing the triggering pin (9) while being replaced into the housing (5), and a support (11) that transmits the movement of the triggering pin (4) moving by means of the brewing chamber (4) and the tension means (10) to the lid (7). When placed into the housing (5), the brewing chamber (4) contacts the triggering pin (9) and while moving deeper into the housing (5), pushes the triggering pin (9) backward. With the movement of the triggering pin (9), the tension means (10) is compressed. The support (11) connected to the triggering pin (9) transmits the movement of the triggering pin (9) preferably linearly to the lid (7), thus enabling the lid (7) to move so as to open the top of the capsule chamber (3). When the brewing chamber (4) is taken out of the housing (5), the energy compressed on the tension means (10) is discharged and moves the triggering pin (9) forward. By means of the support (11), the movement of the triggering pin (9) in opposite direction to the previous movement thereof is also transmitted to the lid (7) and the lid (7) covers the top of the capsule housing (3). By means of this embodiment, thanks to a simple mechanical design, the movement of the brewing chamber (4) is synchronized with the movement of the lid (7).

In another embodiment of the present invention, the support (11) forms almost an L shape with the lid (7). The support (11) forms an L shape with the lid (7) so as to be almost perpendicular to the movement directions of the lid (7) and the triggering pin (9). Thus, the support (11) transmits the movement of the triggering pin (9) linearly to the lid (7), enabling the triggering pin (9) and the lid (7) to move in the same direction. By means of the support (11), when the brewing chamber (4) contacts the triggering pin (9), the lid (7) moves in the same direction, in other words, it seems as if the brewing chamber (4) contacts the lid (7).

In another embodiment of the present invention, the lid (7) and the support (11) are produced as integrated to each other. In this embodiment, the lid (7) and the support (11) are produced as a single piece by using a single mold preferably by means of plastic injection method.

In another embodiment of the present invention, the coffee machine (1) comprises a warning sign (12) that is disposed on the lid (7) and that enables the user to be warned. In this embodiment, the lid (7) covers the top of the capsule housing (3) and indicates to the user that the brewing chamber (4) is not in place and the warning sign (12) reminds the user that the capsule (K) should not be placed into the capsule housing (3) when the brewing chamber (4) is outside the housing (5).

In another embodiment of the present invention, the lid (7) has a color different than the color of the capsule housing (3). In this embodiment, awareness of the user about the fact that coffee should not be brewed, in other words, the capsule (K) should not be placed into the capsule housing (3) when the brewing chamber (4) is outside the housing (5) is increased.

In another embodiment of the present invention, the coffee machine (1) is suitable for brewing Turkish coffee. The coffee is brewed in the brewing chamber (4) and decanted into a cup.

In the coffee machine of the present invention (1), by means of the lid (7) that provides the closing of the top of the capsule housing (3) when the brewing chamber (4) is not inside the housing (5), emptying and falling of the coffee contained in the capsule (K) on the heater (6) when the brewing chamber (4) is not in place is prevented. The lid (7) that opens the top of the capsule housing (3) upon the replacement of the brewing chamber (4) enables the coffee to be brewed in a safe manner by placing the capsule (K) into the capsule housing (3).

## Claims

1. A coffee machine (1) **comprising** a body (2); a capsule housing (3) disposed on the upper part of the body (2) and wherein preferably a single-use capsule (K) is placed; a brewing chamber (4) that is disposed within the body (2) under the capsule housing (3); a housing (5) that is disposed in the body (2) and wherein the brewing chamber (4) is placed, and a heater (6) that provides the heating of the brewing chamber (4), **characterized by** a lid (7) that moves when the brewing chamber (4) is taken out of the housing (5) and enables the top of the capsule housing (3) to be partially closed.

2. A coffee machine (1) as in Claim 1, **characterized by** the lid (7) that is pushed by the brewing chamber (4) when the brewing chamber (4) is replaced into the housing (5), thus providing the opening of the top of the capsule housing (3).

3. A coffee machine (1) as in Claim 1 or 2, **characterized by** the lid (7) that almost completely closes the top of the capsule housing (3).

4. A coffee machine (1) as in any one of the above claims, **characterized by** a movement mechanism (8) that enables the lid (7) to move with the effect of the brewing chamber (4).

5. A coffee machine (1) as in Claim 4, **characterized by** the movement mechanism (8) that has a triggering pin (9) that the brewing chamber (4) contacts when inside the housing (5) and that has a movable structure; a tension means (10) that is connected to the triggering pin (9) and that is compressed by the brewing chamber (4) by pushing the triggering pin (9) while being replaced into the housing (5), and a support (11) that transmits the movement of the triggering pin (4) moving by means of the brewing chamber (4) and the tension means (10) to the lid (7).

6. A coffee machine (1) as in Claim 5, **characterized by** the support (11) that forms almost an L shape with the lid (7).

7. A coffee machine (1) as in any one of Claim 5 or 6, **characterized by** the support (11) produced as integrated with the lid (7).

8. A coffee machine (1) as in any one of the above claims, **characterized by** a warning sign that is disposed on the lid (7) and that enables the user to be warned.

9. A coffee machine (1) as in any one of the above claims, **characterized by** the lid (7) in a color different from the color of the capsule housing (3).

## Patentansprüche

1. Kaffeemaschine (1) umfassend einen Körper (2); ein Kapselgehäuse (3), das am oberen Teil des Körpers (2) angeordnet ist und wobei vorzugsweise eine Einwegkapsel (K) angeordnet ist; einen Brühkammer (4), der innerhalb des Körpers (2) unter dem Kapselgehäuse (3) angeordnet ist; ein Gehäuse (5), das an dem Körper (2) angeordnet ist und wobei der Brühkammer (4) sich befindet, und eine Heizung (6), die die Erwärmung der Brühkammer (4) bereitstellt, **gekennzeichnet durch** den Deckel (7), der sich bewegt, wenn der Brühkammer (4) aus dem Gehäuse (5) herausgenommen wird und ermöglicht, dass die Oberseite des Kapselgehäuses (3) teilweise geschlossen ist.

2. Kaffeemaschine (1) nach Anspruch 1, **gekennzeichnet durch** den Deckel (7), der bei einem Wechsel der Brühkammer (4) in das Gehäuse (5) von der Brühkammer (4) geschoben wird und so die Öffnung der Oberseite des Kapselgehäuses (3) bereitstellt.

3. Kaffeemaschine (1) nach Anspruch 1 oder 2, **gekennzeichnet durch** den Deckel (7), der die Oberseite des Kapselgehäuses (3) nahezu vollständig verschließt.

4. Kaffeemaschine (1) nach einem der vorangehenden Ansprüche, **gekennzeichnet durch** einen Bewegungsmechanismus (8), der es dem Deckel (7) ermöglicht, sich mit der Wirkung der Brühkammer (4) zu bewegen.

5. Kaffeemaschine (1) nach Anspruch 4, **gekennzeichnet durch** den Bewegungsmechanismus (8), der einen Auslösestift (9) aufweist, den die Brühkammer (4) im Inneren des Gehäuses (5) kontaktiert und der eine bewegliche Struktur aufweist; ein Zugmittel (10), das mit dem Auslösestift (9) verbunden ist, und das durch Drücken des Auslösestiftes (9) während des Austausches in das Gehäuse (5) durch die Brühkammer (4) zusammengedrückt wird, und einen Träger (11), die die Bewegung des Auslösestiftes (4) mittels der Brühkammer (4) und der Zugmittel (10) auf den Deckel (7) überträgt.

6. Kaffeemaschine (1) nach Anspruch 5, **gekennzeichnet durch** den Träger (11), der nahezu mit dem Deckel (7) eine L-Form bildet.

7. Kaffeemaschine (1) nach einem der Ansprüche 5 oder 6, **gekennzeichnet durch** den Träger (11), der in den Deckel (7) integriert ist.

8. Kaffeemaschine (1) nach einem der vorangehenden Ansprüche, **gekennzeichnet durch** ein Warnzeichen, das an dem Deckel (7) angeordnet ist und das dem Benutzer ermöglicht, gewarnt zu werden.

9. Kaffeemaschine (1) nach einem der vorangehenden Ansprüche, **gekennzeichnet durch** den Deckel (7) in einer Farbe, die sich von der Farbe des Kapselgehäuses (3) unterscheidet.

## Revendications

1. Machine à café (1) **comprenant** un corps (2); un boîtier de capsule (3) disposé sur la partie supérieure du corps (2) et dans lequel, de préférence, une capsule à usage unique (K) est placée; une chambre d'infusion (4) qui est disposée à l'intérieur du corps (2) sous le boîtier de capsule (3); un boîtier (5) qui est disposé dans le corps (2) et dans lequel est placée la chambre d'infusion (4), et un élément chauffant (6) qui assure le chauffage de la chambre d'infusion (4), **caractérisée par** un couvercle (7) qui se déplace lorsque la chambre d'infusion (4) est retirée du boîtier (5) et permet de fermer partiellement la partie supérieure du boîtier de capsule (3).

2. Machine à café (1) selon la revendication 1, **caractérisée par** le couvercle (7) qui est poussé par la chambre d'infusion (4) lorsque la chambre d'infusion (4) est remplacée dans le logement (5) du dessus du boîtier de la capsule (3).

3. Machine à café (1) selon la revendication 1 ou 2, **caractérisée par** le couvercle (7) ferme presque complètement le haut du logement de la capsule (3).

4. Machine à café (1) selon l'une quelconque des revendications précédentes, **caractérisée par** un mécanisme de déplacement (8) qui permet au couvercle (7) de se déplacer avec l'effet de la chambre d'infusion (4).

5. Machine à café (1) selon la revendication 4, **caractérisée par** le mécanisme de déplacement (8) qui comporte une broche de déclenchement (9) que la chambre d'infusion (4) entre en contact avec l'intérieur du boîtier (5) et qui présente une structure mobile; un moyen de tension (10) qui est relié à la broche de déclenchement (9) et qui est comprimé par la chambre d'infusion (4) en poussant la broche de déclenchement (9) tout en étant replacée dans le boîtier (5), et un support (11) qui transmet le mouvement de la broche de déclenchement (4) se déplaçant au moyen de la chambre d'infusion (4) et des moyens de tension (10) au couvercle (7).

6. Machine à café (1) selon la revendication 5, **caractérisée par** le support (11) qui forme presque une forme de L avec le couvercle (7).

7. Machine à café (1) selon la revendication 5 ou 6, **caractérisée par** le support (11) réalisé en tant qu'intégré avec le couvercle (7).

8. Machine à café (1) selon l'une quelconque des revendications précédentes, **caractérisée par** un panneau d'avertissement disposé sur le couvercle (7) et permettant à l'utilisateur d'être averti.

9. Machine à café (1) selon l'une quelconque des revendications précédentes, **caractérisée par** le couvercle (7) d'une couleur différente de la couleur du boîtier de la capsule (3).
